# EUROPEAN PATENT APPLICATION

(11) **EP 4 656 859 A1**
(43) Date of publication of application: **03.12.2025**
(21) Application number: 25180233.6
(22) Date of filing: 02.06.2025
(51) Int. Cl.: F02C 3/22, F01D 25/02, F02C 3/30, F02C 7/16, F02C 7/224

(54) **DEICING AND ICING PREVENTION SYSTEM FOR ADVANCE CYCLE CONDENSERS**

(30) Priority: 31.05.2024 US 202418731105
(71) Applicant: RTX Corporation, Farmington, CT 06032 (US)
(72) Inventor: CHERE, Gregory M., Glastonbury, 06033 (US)
(74) Representative: Dehns

(57) **Abstract**

An apparatus includes a cryo-fuel tank (138), at least two heat exchangers (130a, 130b), at least one valve (128a), and a condenser (132). The cryo-fuel tank (138) is configured to store cryo-fuel. The at least two heat exchangers (130a, 130b) are configured to reduce heat of a core flow through an engine, where the at least two heat exchangers (130a, 130b) have different heat transfer efficiencies. The at least one valve (128a) is configured to control the core flow between each of the at least two heat exchangers (130a, 130b). The condenser (132) is configured to exchange heat between the cryo-fuel and the core flow processed through the at least two heat exchangers (130a, 130b).

## Description

### TECHNICAL FIELD

This invention relates generally to gas turbine engines. More specifically, this disclosure relates to a deicing and icing prevention system for advance cycle condensers.

### BACKGROUND

In heat exchangers that intend to capture low-grade heat, a risk exists during transients where a condenser may freeze. While a deceleration of a throttle reduces heat coming from an engine core due to reduced combustion and flow, the condenser itself does not immediately react due to a time delay associated with the heat exchanger reaching a new thermal equilibrium at the new operating condition. Effectively, the condenser may be too cold right after deceleration and before the new operating point's thermal equilibrium is reached, resulting in the risk of freezing and back-pressuring the core flow path.

### SUMMARY

This invention provides a deicing and icing prevention system for advance cycle condensers.

According to a first aspect of the invention, an apparatus includes a cryo-fuel tank, at least two heat exchangers, at least one valve, and a condenser. The cryo-fuel tank is configured to store cryo-fuel. The at least two heat exchangers are configured to reduce heat of a core flow through an engine, where the at least two heat exchangers have different heat transfer efficiencies. The at least one valve is configured to control the core flow between each of the at least two heat exchangers. The condenser is configured to exchange heat between the cryo-fuel and the core flow processed through the at least two heat exchangers.

In an embodiment of the above, the at least two heat exchangers include a first heat exchanger and a second heat exchanger, and the at least one valve is configured to provide a first portion of the core flow to the first heat exchanger and a second portion of the core flow to the second heat exchanger.

In an embodiment of any of the above, the at least one valve is able to completely divert the core flow to a less-efficient heat exchanger of the at least two heat exchangers.

In an embodiment of any of the above, the apparatus further includes a bypass path configured to route the core flow to avoid the at least two heat exchangers.

**In** an embodiment of any of the above, the bypass path includes an additional heat exchanger with a lower efficiency than the at least two heat exchangers.

**In** an embodiment of any of the above, the apparatus further includes a valve configured to control the core flow to the bypass path.

**In** an embodiment of any of the above, the at least two heat exchangers are arranged in order of decreasing efficiency.

**In** an embodiment of any of the above, the at least two heat exchangers include a first heat exchanger, a second heat exchanger, and a third heat exchanger, and the first heat exchanger, the second heat exchanger, and the third heat exchanger are arranged in order of decreasing heat transfer efficiency.

In an embodiment of any of the above, the at least one valve includes (i) a first valve configured to control the core flow between the first heat exchanger and the second heat exchanger and (ii) a second valve configured to control the core flow between the second heat exchanger and the third heat exchanger.

In an embodiment of any of the above, the at least one valve includes (i) a first valve configured to control the core flow between the first heat exchanger and the second heat exchanger and (ii) a second valve configured to control the core flow between the first heat exchanger and the third heat exchanger.

According to another aspect of the invention, an engine includes a fan, at least one compressor, at least one turbine, a cryo-fuel tank, at least two heat exchangers, at least one valve, and a condenser. The fan is configured to generate a core flow. The at least one compressor is configured to compress the core flow. The at least one turbine is configured to reduce the core flow, and/or to extract work from the core flow. The cryo-fuel tank is configured to store cryo-fuel. The at least two heat exchangers are configured to reduce heat of the core flow that has passed through the at least one turbine, where the at least two heat exchangers have different heat transfer efficiencies. The at least one valve is configured to control the core flow between each of the at least two heat exchangers. The condenser is configured to exchange heat between the cryo-fuel and the core flow processed through the at least two heat exchangers.

In an embodiment of the above, the at least two heat exchangers include a first heat exchanger and a second heat exchanger, and the at least one valve is configured to provide a first portion of the core flow to the first heat exchanger and a second portion of the core flow to the second heat exchanger.

In an embodiment of any of the above, the at least one valve is able to completely divert the core flow to a less-efficient heat exchanger of the at least two heat exchangers.

In an embodiment of any of the above, the engine further includes a bypass path configured to route the core flow to avoid the at least two heat exchangers.

In an embodiment of any of the above, the bypass path includes an additional heat exchanger with a lower efficiency than the at least two heat exchangers.

In an embodiment of any of the above, the engine further includes a valve configured to control the core flow to the bypass path.

In an embodiment of any of the above, the at least two heat exchangers are arranged in order of decreasing efficiency.

In an embodiment of any of the above, the at least two heat exchangers include a first heat exchanger, a second heat exchanger, and a third heat exchanger, and the first heat exchanger, the second heat exchanger, and the third heat exchanger are arranged in order of decreasing heat transfer efficiency.

In an embodiment of any of the above, the at least one valve includes (i) a first valve configured to control the core flow between the first heat exchanger and the second heat exchanger and (ii) a second valve configured to control the core flow between the second heat exchanger and the third heat exchanger.

In an embodiment of any of the above, the at least one valve includes (i) a first valve configured to control the core flow between the first heat exchanger and the second heat exchanger and (ii) a second valve configured to control the core flow between the first heat exchanger and the third heat exchanger.

Other technical features may be readily apparent to one skilled in the art from the following figures, descriptions, and claims.

### BRIEF DESCRIPTION OF THE DRAWINGS

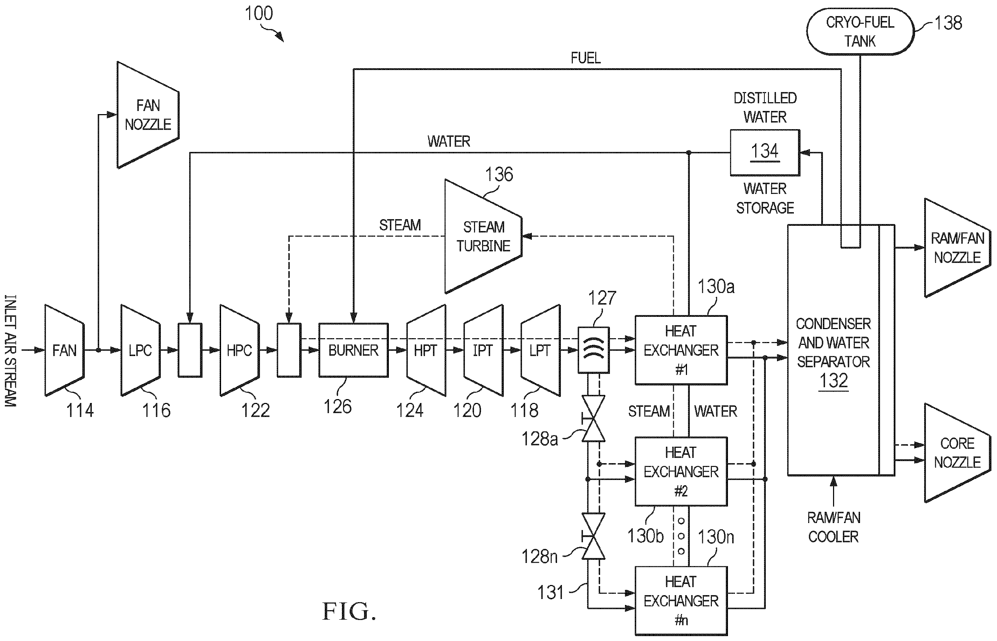

For a more complete understanding of this disclosure, reference is made to the following description, taken in conjunction with the accompanying drawings, in which:
The FIGURE illustrates an example engine in accordance with this disclosure.

### DETAILED DESCRIPTION

The FIGURE, described below, and its various embodiments is used to describe the principles of the present disclosure are by way of illustration only and should not be construed in any way to limit the scope of this disclosure. Those skilled in the art will understand that the principles of the present disclosure may be implemented in any type of suitably arranged device or system.

As described above, in heat exchangers that intend to capture low-grade heat, a risk exists during transients where a condenser may freeze. While a deceleration of a throttle reduces heat coming from an engine core due to reduced combustion and flow, the condenser itself does not immediately react due to a time delay associated with the heat exchanger reaching a new thermal equilibrium at the new operating condition. Effectively, the condenser may be too cold right after deceleration and before the new operating point's thermal equilibrium is reached, resulting in the risk of freezing and back-pressuring the core flow path.

As described in more detail below, a bypass of an upstream heat exchanger allows for additional heat from the core to mitigate the risk of icing. This allows a hotter flow to mix with a flow already entering the condenser and moves water in exhaust gases further from the point of freezing.

The FIGURE illustrates an example gas turbine engine 100 in accordance with this disclosure. As shown in the FIGURE, the gas turbine engine 100 is disclosed that generally incorporates a fan 114, a first (or low) pressure compressor 116, a first (or low) pressure turbine 118, a second (or intermediate) pressure turbine 120, a second (or high) pressure compressor 122, a third (or high) pressure turbine 124, a combustor 126, a flow control 127, a plurality of valves 128a-128n, a plurality of heat exchangers 130a-130n, a condenser and fluid separator 132, a fluid storage 134, a steam turbine 136, and a cryo-fuel tank 138. Alternative engines might include an augmentor section among other systems or features. The fan 114 drives air along a bypass flow path in a bypass duct defined within a nacelle, while the compressors 116 and 122 drive air along a core flow path for compression and communication into the combustor 126 then expansion through the turbines 118, 120, and 124.

A low-speed shaft generally interconnects the fan 114 and the low-pressure turbine 118 (and the low-pressure compressor 116 in two-spool architectures). In some embodiments, the low-speed shaft can be connected to the fan 114 through a speed change mechanism (e.g., geared mechanism), which drives the fan 114 at a lower speed than the low-speed shaft 110. In other embodiments, the low-speed shaft can be configured to directly drive the fan 114. In three-spool architectures, such as that illustrated in the FIGURE, the intermediate-pressure turbine 120 couples to and is configured to drive the low-pressure compressor 116. A high-speed shaft can interconnect the high-pressure compressor 122 with the high-pressure turbine 124. A combustor 126 is arranged in the gas turbine engine 100 between the high-pressure compressor 122 and the high-pressure turbine 124. In some examples, a mid-turbine frame of the engine static structure is arranged generally between the high-pressure turbine 124 and the low-pressure turbine 118. The mid-turbine frame further supports bearing systems adjacent to the turbines 118, 120, and 124. The low-pressure compressor 116, the low-pressure turbine 118, the intermediate-pressure turbine 120, the high-pressure compressor 122, and the high-pressure turbine 124 may contain multiple stages.

The core airflow can be compressed by the low-pressure compressor 116 then the high-pressure compressor 122, mixed and burned with fuel in the combustor 126, then expanded over the high-pressure turbine 124, the intermediate-pressure turbine 120, and low-pressure turbine 118. The turbines 118, 120, and 124 rotationally drive the respective low-speed shaft and high-speed shaft in response to the expansion. It will be appreciated that each of the positions of the fan 114, the low-pressure compressor 116, the low-pressure turbine 118, the intermediate-pressure turbine 120, the high-pressure compressor 122, the high-pressure turbine 124, and the combustor 126 may be varied.

The flow control 127 and the valves 128a-128n can control the core flow through heat exchangers 130a-130n. A valve, as used herein, may be defined as any mechanism that allows for the control or distribution of flow, including but not limited to vanes (static or actuating), dampers, or baffles. The flow control 127 can be controlled to partially or fully control the flow path to the primary heat exchanger 130a and the valves 128a-128n. The valves 128a-128n can be controlled to partially or fully open a flow path to the heat exchangers 130b-130n. Each of the valves 128a-128n can be individually controlled. For example, a first valve 128a can be partially or fully opened while the last valve 128n is closed. The valves 128a-128n can be arranged in series or in parallel. Controlling the core flow through the different heat exchangers 130a-130n can allow for adjustments of the heat drawn from the core flow. If a condition occurs in which icing of the condenser is more likely, such as the speed of the engine is decreased, the valves 128a-128n can be controlled to guide the core flow to a heat exchanger 130 with a lowest heat transfer efficiency (e.g., a least efficient heat exchanger 130n).

In certain embodiments, while the valves 128a-128n are arranged in series, at least one valve 128a-128n can be positioned between each adjacent heat exchanger 130a-130n. For example, a first valve 128a can be positioned between the first heat exchanger 130a and the second heat exchanger 130b and an nth valve 128n can be positioned between the second heat exchanger 130b and the nth heat exchanger 130n. The valves 128a-128n can be controlled to close the flow path to a respective heat exchanger 130a-130n, allow fluid to pass through to a subsequent valves 128b-128n, and/or allow fluid to pass to a corresponding heat exchanger 130b-130n.

In certain embodiments, while the valves 128a-128n are arranged in parallel, at least one valve 128a-128n can be positioned between the first heat exchanger 130a and each of the remaining heat exchanger 130b-130n. For example, a first valve 128a can be positioned between the first heat exchanger 130a and a second heat exchanger 130b and an nth valve 128n can be positioned between the first heat exchanger 130a and the nth heat exchanger 130n. The valves 128a-128n can be controlled to close the fluid flow path to each specific heat exchanger 130b-130n and partially or fully opened to each specific heat exchanger 130b-130n.

In some embodiments, the least efficient heat exchanger 130n can be positioned on a bypass path 131. In certain embodiments, the least efficient heat exchanger 130n is simply a pipe of the bypass path 131. The bypass path 131 can be used when the heat of the core flow is low enough such that any heat removal ahead of the condenser would cause the flow to be below a threshold that would cause icing of the condenser and fluid separator 132.

The core flow processed through the heat exchangers 130a-130n can be output to the condenser and fluid separator 132. The condenser and fluid separator 132 can extract "low-grade" heat, or the heat of condensation, from the core flow processed by the heat exchangers 130a-130n. The fluid can be condensed in the condenser and fluid separator 132. The fluid recovered in the condenser and fluid separator 132 can be output to the fluid storage 134. The cryo-fuel tank 138 can also exchange heat with the fluid in the condenser and fluid separator 132. The fluid can be output to the fluid storage 134.

The heat exchangers 130a-130n can receive fluid from a fluid storage 134 and output the fluid to a steam turbine 136. The fluid passed through the steam turbine 136 can be passed back through the heat exchangers 130a-130n. The fluid received from the fluid storage 134 can draw heat from the fluids that pass through the valves 128a-128n. In some embodiments, each subsequent heat exchanger 130a-130n can be designed to be less efficient (e.g., less heat transfer efficiency) than a previous heat exchanger. For example, the first heat exchanger 130a can have a highest efficiency, the second heat exchanger 130b can have a second highest efficiency, and the nth heat exchanger 130n can have a lowest (comparable) efficiency.

Although the FIGURE illustrates an example gas turbine engine 100 in accordance with this disclosure, various changes may be made to the FIGURE. For example, the gas turbine engine 100 is illustrated as a three-spool architecture. However, other architectures are contemplated herein, such as a two-spool architecture or the like. Additionally, the various components in the FIGURE may be combined, further subdivided, replicated, omitted, or rearranged and additional components may be added according to particular needs. In particular, the heat exchangers 130a-130n may include more or less than three heat exchangers.

It may be advantageous to set forth definitions of certain words and phrases used throughout this patent document. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. An apparatus comprising:
a cryo-fuel tank (138) configured to store cryo-fuel;
at least two heat exchangers (130a, 130b) configured to reduce heat of a core flow through an engine, wherein the at least two heat exchangers (130a, 130b) have different heat transfer efficiencies;
at least one valve (128a) configured to control the core flow between each of the at least two heat exchangers (130a, 130b); and
a condenser (132) configured to exchange heat between the cryo-fuel and the core flow processed through the at least two heat exchangers (130a, 130b).

2. The apparatus of claim 1, wherein:
the at least two heat exchangers (130a, 130b) comprise a first heat exchanger (130a) and a second heat exchanger (130b); and
the at least one valve (128a) is configured to provide a first portion of the core flow to the first heat exchanger (130a) and a second portion of the core flow to the second heat exchanger (130b).

3. The apparatus of claim 1 or 2, wherein the at least one valve (128a) is able to completely divert the core flow to a less-efficient heat exchanger of the at least two heat exchangers (130a, 130b).

4. The apparatus of any preceding claim, further comprising a bypass path (131) configured to route the core flow to avoid the at least two heat exchangers (130a, 130b).

5. The apparatus of claim 4, wherein the bypass path (131) includes an additional heat exchanger (130n) with a lower efficiency than the at least two heat exchangers (130a, 130b).

6. The apparatus of claim 4 or 5, further comprising a valve (128n) configured to control the core flow to the bypass path (131).

7. The apparatus of any preceding claim, wherein the at least two heat exchangers (130a, 130b) are arranged in order of decreasing heat transfer efficiency.

8. The apparatus of any preceding claim, wherein:
the at least two heat exchangers (130a, 130b) comprise a or the first heat exchanger (130a), a or the second heat exchanger (130b), and a third heat exchanger (130n); and
the first heat exchanger (130a), the second heat exchanger (130b), and the third heat exchanger (130n) are arranged in order of decreasing heat transfer efficiency.

9. The apparatus of claim 8, wherein the at least one valve (128a) comprises:
a first valve (128a) configured to control the core flow between the first heat exchanger (130a) and the second heat exchanger (130b); and
a second valve (128n) configured to control the core flow between the second heat exchanger (130b) and the third heat exchanger (130n).

10. The apparatus of claim 8, wherein the at least one valve (128a) comprises:
a first valve (128a) configured to control the core flow between the first heat exchanger (130a) and the second heat exchanger (130b); and
a second valve (128a) configured to control the core flow between the first heat exchanger (130a) and the third heat exchanger (130n).

11. An engine comprising:
a fan (114) configured to generate a core flow;
at least one compressor (116; 122) configured to compress the core flow;
at least one turbine (124; 120; 118) configured to extract work from the core flow; and
the apparatus of any preceding claim, wherein the at least two heat exchangers (130a, 130b) are configured to reduce heat of the core flow passing through the at least one turbine (124; 120; 118).
